# EUROPEAN PATENT SPECIFICATION

(11) **EP 3 500 503 B1**
(45) Date of publication and mention of the grant of the patent: **14.10.2020**
(21) Application number: 17746516.8
(22) Date of filing: 08.08.2017
(51) Int. Cl.: B65D 75/58, A47J 31/34, A47J 31/40, B65D 85/804

(54) **FITMENT ASSEMBLY FOR FOOD OR BEVERAGE CONTAINERS**
EINBAUANORDNUNG FÜR LEBENSMITTEL- ODER GETRÄNKEBEHÄLTER
ENSEMBLE ACCESSOIRE POUR RÉCIPIENTS DESTINÉS À DES ALIMENTS OU DES BOISSONS

(30) Priority: 16.08.2016 EP 16184305
(43) Date of publication of application: 26.06.2019
(73) Proprietor: Société des Produits Nestlé S.A., 1800 Vevey (CH)
(72) Inventor: JARISCH, Christian, 1095 Lutry (CH); TALON, Christian, 1134 Vufflens-le-Château (CH); HEYDEL, Christophe Sébastien Paul, 2025 Chez-Le-Bart (CH); PELLEGRINI, Stéphane, 25160 Montperreux (FR); DENISART, Jean-Luc, 1096 Cully (CH); BAENNINGER, Philippe, 1066 Epalinges (CH); BONACCI, Enzo, 1073 Savigny (CH); VERETTAS, Irène, 1376 Goumoëns la ville (CH)
(74) Representative: Navarro Fernández, Maria Isabel
(86) International application number: PCT/EP2017/070036
(87) International publication number: WO 2018/033429

(56) References cited:
- WO-A1-99/05036
- WO-A1-2015/132320

## Description

### Field of the invention

The present invention relates to a fitment assembly for being used with food or beverage containers; in particular the invention relates to a fitment assembly that can rotate and adopt multiple orientations within the food or beverage container.

### Background of the invention

Preparing beverages by introducing a capsule containing a food or beverage ingredient, such as ground coffee or instant coffee, in a beverage dispensing machine and injecting water into the capsule is known in the state of the art: the beverage or food ingredient is typically extracted or dissolved into water to form the beverage or the desired final product, which flows out of the capsule through a suitable outlet.

As such, different capsules have been developed in the past, these capsules being at least differentiated by the nature of the capsule body used for storing the food or the beverage ingredient. While most of the capsules are made of a rigid body or semi-rigid body, typically made though injection moulding or thermoforming, flexible types of packs can be made out of foil materials. Flexible packs have generally the advantage to semi-rigid and rigid capsules that less amount of material is used to pack the product which leads to overall less production cost, to lower life cycle impact shown in several life-cycle assessments and to advantages on the part of the user, who will need less available space for storing these packs, as they are more compact.

It is known in the state of the art, for example as per document WO 99/05044, a flexible beverage-producing sachet comprising a beverage ingredient in a volume formed by bonding two laminates at their edges, having a base seam into which a conduit of rigid plastics is bonded. An inlet nozzle is provided at the top of the resulting sachet for introducing water that is mixed with the beverage or food ingredient inside the inner volume of the sachet, the beverage produced being then evacuated through a beverage outlet arranged at the bottom of the pack, where closing means are provided, such that the closing means are adapted to open under pressure when pressurized water is introduced into the sachet, allowing the beverage to evacuate through the beverage outlet. However, this configuration presents important drawbacks for the consumer: the opening of the closing means is obtained by increase of pressure inside the sachet. Yet this pressure increase is not recommended for the preparation of some beverages because it creates bubbles at the surface of the beverage, for example this would not be desired for the preparation of tea. Besides, there exists the risk for the user that the packages may not rupture at the desired pressure, and that they would finally open up in an uncontrollable explosion. For this reason the apparatus where the sachet is processed needs to comprise means for totally enclosing the sachet in the machine during beverage preparation in order to avoid damages for the consumer. Such flexible beverage-producing sachets as described do not therefore allow a proper control of the insertion of water in the inner volume, and neither a proper control of the outlet for delivering the beverage prepared inside. Therefore, it would be desirable to have a flexible sachet that allows this specific and good regulated control of the inlet and of the outlet parts.

Another drawback of these known sachets is that the inlet nozzle introduces water in the pack always according to the same vertical top-down orientation in the sachet. Therefore, all the beverages are produced according to the same process inside the sachet. Yet depending on the nature of the beverage ingredient and the desired beverage the beverage ingredient should be processed differently. It would thus also be very advantageous to provide a sachet where the inlet of the fluid and the outlet of the prepared beverages are differently configured according to the type of product or beverage that is prepared inside.

Other problems of existing pouches in the state of the art are for example that, when having a powder ingredient in its inner volume that is diluted or processed in order to prepare an appropriate beverage, sometimes powder starts to be dispensed without the product having been properly prepared or diluted: avoiding this would also be a main advantage of a sachet or pouch.

Another disadvantage of existing pouches or sachets is that, when the food product or beverage has been prepared and the sachet is removed from the machine, in most of the cases, because the outlet through which the product is dispensed still remains open, dripping of the remaining product inside occurs.

Even more, when these flexible pouches or sachets are used with parts of the machine injecting water inside, typically a needle, there are times when there exists a backflow of the fluid injected towards this needle which can produce contamination of the machine and/or of the needle.

Document WO 2015/132320 A1 from the same applicant is known from the state of the art: it discloses a pack having an inner volume with a food or beverage ingredient to produce a beverage. The pack comprises at least one inlet for introducing water inside and at least one outlet for delivering the beverage, arranged in an insert positioned at the bottom of the pack, the insert further comprising a centering hole to correctly position the pack in the machine.

Also, document WO 99/05036 A1 is known, disclosing a sachet comprising inside a beverage or food product: the sachet is made out of two laminates bonded together that will peel open and separate upon introduction of pressurized hot water inside, through a nozzle.

Therefore, it would be desirable to provide a flexible pack for preparing food or beverage products which addresses the problems and drawbacks in the state of the art.

The present invention comes to provide a solution to the above-described needs, as it will be further explained. The invention also aims at other objects and particularly at the solution of other problems as will appear in the rest of the present description.

### Summary of the invention

According to a first aspect, the invention relates to a fitment assembly for one or a plurality of food or beverage containers, each container comprising at least one ingredient for the preparation of a food or beverage product, the fitment assembly comprising at least one fluid inlet communicating with at least one injection hole through which a fluid can be supplied into the food or beverage containers, and at least one dispensing outlet through which the food or beverage product is dispensed. The fitment assembly further comprises two parts rotatable relative to each other such that this relative rotation opens or closes, totally or up to a certain degree, the at least one dispensing outlet.

Preferably, the relative rotation of the two parts of the fitment assembly further opens or closes, totally or up to a certain degree, at least one injection hole.

According to the invention, the fluid inlet is arranged in a rotatable part of the fitment assembly and communicates through an injection hole with the inner volume of the container. According to another embodiment, the fluid inlet is arranged in a stationary part of the fitment assembly and communicates through an injection hole with the inner volume of the container.

Typically, the relative rotation of the two parts of the fitment assembly of the invention is configured in such a way as to be able to follow different defined sequences corresponding to different steps of usage of the fitment assembly together with the one or plurality of containers, as a function of the type of ingredients and the type of food or beverage product.

Typically, the fitment assembly of the invention comprises two fluid inlets reversibly positioned.

Preferably, the fitment assembly of the invention comprises a plurality of injection holes sequentially and/or simultaneously actuated as a function of the type of product prepared.

According to an embodiment of the invention, Fitment assembly (10) according to claim 7, connected to a plurality of containers, each communicating to at least one of the injection holes in the fitment assembly.

According to the invention, the fitment assembly is configured for injecting a high velocity jet into the one or plurality of containers through the at least one injection hole.

Typically, the fitment assembly can comprise a flexible cover over the at least one fluid inlet, this cover being piercable by appropriate means able to inject a fluid though the fluid inlet.

In one embodiment of the invention, the fitment assembly comprises a flexible cover overwrapping it, the rotatable part of the fitment assembly comprising a sharpened area able to tear open when rotating the flexible cover in order to allow dispensing of the product through the dispensing outlet.

According to a second aspect, the invention refers to a pack comprising a fitment assembly as described previously and at least one food or beverage container to which this fitment assembly is attached.

Preferably, the containers in the pack of the invention are configured by impermeable sheets joined to one another or by one impermeable sheet folded in half, defining an inner volume where a food or beverage ingredient is stored.

Typically, the impermeable sheets overwrap the fitment assembly.

According to the invention, the pack further comprises identification means with the information for processing the ingredients inside the one or plurality of containers such as temperature, flow and/or volume of the fluid introduced, preparation time, sequence of rotation of the parts in the fitment assembly, for example.

According to a third aspect, the invention relates to a machine for preparing a food or beverage product from a pack as described, the machine comprising means designed for engaging with the fitment assembly and for injecting a fluid through the at least one fluid , the means being further configured to be able to rotate the two parts of the fitment assembly relative to each other.

Typically, the machine of the invention is further provided with means configured to be able to rotate the two parts of the fitment assembly relative to each other.

The machine of the invention is typically configured to receive a pack as the one described in an essentially vertical position, injecting fluid into it in an upward direction.

The machine of the invention preferably further comprises control means to control the processing of the ingredients inside the one or plurality of containers such as temperature, flow and/or volume of the fluid introduced, preparation time, sequence of rotation of the parts in the fitment assembly, for example.

### Brief description of the drawings

Further features, advantages and objects of the present invention will become apparent for a skilled person when reading the following detailed description of non-limiting embodiments of the present invention, when taken in conjunction with the appended drawings, in which:
Fig. 1 shows schematically a pack comprising a container and a fitment assembly according to the present invention.
Fig. 2 shows a detail of a fitment assembly according to a first embodiment of the present invention, in a position where the inlet and the outlet are closed.
Fig. 3 shows the fitment assembly of Figure 2 where the inlet is open for pre-wetting, the outlet being closed.
Fig. 4 shows an upper view in detail of Fig. 3, showing the inlet open for pre-wetting.
Fig. 5 shows the fitment assembly of Figure 2 where the outlet is open for dispensing.
Fig. 6 shows an upper view in detail of Fig. 5, showing the outlet open for dispensing.
Fig. 7 shows a detail of a fitment assembly according to a second embodiment of the present invention, in a position where the outlet is closed.
Figs. 8a-b show further details and views of the fitment assembly in Figure 7, where the outlet is open.
Fig. 9 shows another view of the fitment assembly in Figures 8a-b, where the outlet is open for dispensing.
Fig. 10 shows a detail of a fitment assembly according to a third embodiment of the present invention.
Figs. 11-12 show the components in a fitment assembly as shown in Figure 10.
Fig. 13 shows a detail of a fitment assembly according to a fourth embodiment of the present invention, where the outlet is closed.
Fig. 14 shows the fitment assembly of Figure 13 but now in a position where the outlet is open.
Fig. 15 shows schematically the insertion of a pack according to the invention in a beverage preparation machine.
Fig. 16 shows schematically the insertion of a pack according to the invention in a beverage preparation machine, the pack being inserted frontally in the machine.
Fig. 17 shows schematically a beverage preparation machine according to the present invention.

### Detailed description of exemplary embodiments

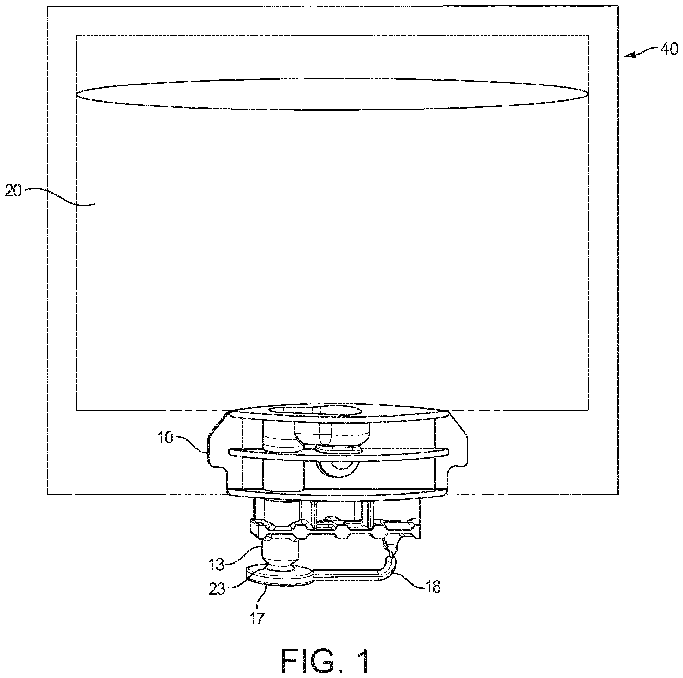

According to a first aspect, the present invention relates to a *fitment assembly 10* for being used with at least one food or beverage container 20 as shown schematically in Figure 1. This container 20 comprises at least one ingredient for the preparation of food or beverage product. When more than one container is used, typically each container comprises a different product or ingredient such that they are mixed in order to obtain a more complex product or beverage recipe preparation. The content of the containers can then be either sequentially or simultaneously prepared and dispensed through the fitment assembly 10.

According to the present invention the food or beverage ingredient of the container can be comprised within the list of: soups, fruit juices, vegetable juices, bouillons, coffee, chocolate, tea, milk or creamer, smoothies, purees, coulis, creams or a combination thereof. The food or beverage ingredient can be a soluble food or beverage ingredient. Preferably the food or beverage ingredient is a soluble food or beverage ingredient selected in the list of:
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid pieces. The food or beverage ingredient can also be an infusable food or beverage ingredient like a roast and ground coffee or tea leaves. In that embodiment water extracts the infusable ingredient.

In the present invention fluid covers any aqueous diluent that can be mixed with a soluble beverage ingredient to prepare a beverage, like water, carbonated water, milk, etc. However, according to the invention, water is the preferred fluid which will be used.

The fitment assembly 10 of the invention comprises at least one fluid inlet 12 (typically arranged on a frontal side of the fitment assembly 10) through which a fluid, typically water, is injected, preferably by a needle arranged in a machine cooperating with the fitment assembly, as it will be further described. It is also possible and covered within the scope of the present invention to provide a fitment assembly comprising two fluid inlets, typically on the front and on the rear opposite side of the fitment, so that fluid can be injected reversibly on one side or the other of the said fitment assembly 10, or through both sides at the same time for a faster dissolution.

Through the at least one fluid inlet 12 a fluid is supplied into the food or beverage container 20 in order to properly mix the ingredients with the fluid injected to prepare the corresponding food or beverage product.

The fitment assembly 10 also comprises at least one dispensing outlet 13 through which the food product or beverage is dispensed. The dispensing outlet 13 is preferably configured so that it delivers the product as a free flow, meaning that the product can flow from the dispensing outlet 13 preferably by simple gravity fall. According to a preferred embodiment of the invention, the dispensing outlet 13 comprises an opening 23 at the bottom of the fitment assembly 10, said opening 23 having a transverse section with a surface area equivalent to the surface of a circular surface of diameter of at least 1 mm, preferably at most 4 mm, even more preferably comprised between 1.5 and 3 mm. The dispensing outlet 13 is typically configured as a straight tube oriented essentially vertically in the fitment assembly 10, comprising at its end an opening 23. The length of the tube is preferably of at least 5 mm. Such a length generally enables a finalisation of the froth of the product, typically a beverage, before it is delivered in a drinking cup. An advantage of the dispensing outlet 13 of the present invention is that there is no need to implement a particular connection of it and the machine when a beverage is for example produced, in order to direct the flow of the beverage delivered at the dispensing outlet 13: the beverage can flow from the dispensing outlet 13 directly into a drinking cup.

The fitment assembly 10 is preferably rigid and is made of a rigid plastic material, preferably by injection moulding. Typically, this plastic material can be selected from the following: polypropylene, polyethylene, polyethylene terephthalate and polylactic acid. Also according to a less preferred embodiment the fitment assembly 10 can be made of a metal like aluminium or tin-plate.

Preferably, the fluid inlet 12 is piercable by injecting and piercing means 30, preferably a fluid needle, called in what follows needle, such that these injecting and piercing means 30 typically comprise an inner duct or pipe through which high pressure fluid is injected in the fluid inlet 12. However, it is also possible that the fluid inlet 12 is directly accessible by injecting means which will inject fluid directly without the need to pierce any external lid or membrane. As it will be further explained in more detail, the preferred configuration of the invention is that a flexible sheet of material which configures the container 20 is also arranged covering the fluid inlet 12, this sheet being then pierced by the needle as it has just been described.

Preferably, fluid is injected at a pressure higher than 2 bars, more preferably higher than 3 bars, preferably comprised between 2 and 10 bars, more preferably of around 7 bars. The fluid inlet 12 is configured in such a way that the high pressure fluid injected through it by the injecting and piercing means 30 is converted into a high velocity jet, which is driven into the container or containers. Typically, the diameter of the fluid inlet is comprised between 1 mm and 4 mm, more preferably between 1.5 mm and 3 mm and comprises a yieldably cover over it which can be pierced by the injecting and piercing means 30. The injecting and piercing means 30 also comprise a toroidal ring, preferably made of rubber, ensuring that there is no leakage of fluid outside the fluid inlet while the injecting and piercing means 30 are injecting fluid into the fluid inlet. The fluid inlet 12 is communicated with the inside volume of the container through at least one injection hole 14, having a diameter of at most 1 mm, preferably of at least 0.24 mm, preferably comprised between 0.3 mm and 1 mm, preferably between 0.3 and 0.5 mm, more preferably of about 0.4 mm. With such a configuration, when high pressure fluid is injected by the injecting and piercing means 30 through the fluid inlet 12, it is conveyed internally towards the injection hole 14, from which it is converted into a high velocity jet of fluid injected inside the container 20 when passing through the small section injection hole. Typically, this jet of fluid provided in the container has a velocity of at least 20 m/s.

According to the invention, the fluid inlet can also be configured for providing an orientable high velocity jet into the container, preferably at about 90° with respect to the fluid supply provided into the fluid inlet by the injecting and piercing means 30, though any other angle would be possible and comprised within the scope of the present application.

As described, the fluid inlet 12 together with the injection hole 14 in the fitment assembly 10 are configured for introducing the fluid under the form of a jet in the inner volume of the container 20. By jet it is understood a stream of liquid or fluid that comes out of the fluid inlet and into the inner volume of the food or beverage container quickly and with force. The fluid inlet 12 is configured for introducing fluid in the inner volume of the container with a high velocity, this fluid jet preferably presenting a velocity of at least about 20 m/s, preferably at least 30 m/s. As previously described, such a configuration is preferably obtained in the present invention by placing a constriction (that of the injection hole 14) in the fluid path in the fluid inlet to reduce the size of the section of the fluid inlet. Due to the small surface of the injection hole 14 through which the fluid goes into the inner volume of the container 20, the pressurized fluid creates a jet in the inner volume of the container.

For the same fluid to be provided through the fluid inlet 12, the surface of the injection hole 14 can vary according to the nature of the food and beverage ingredient inside the container which is to be mixed with the fluid. In particular when the ingredient is difficult to dissolve a smaller injection hole creates a jet with a higher velocity which improves agitation and dissolution of this ingredient in the container.

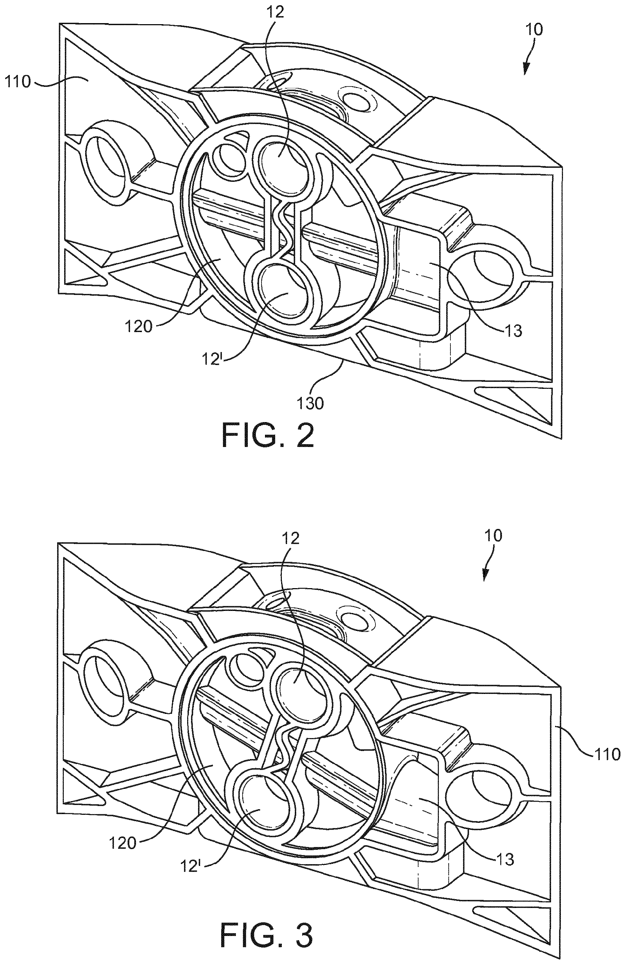

As shown in Figure 2, a possible *first embodiment of a fitment assembly 10 according to the invention* is presented. This fitment assembly 10 comprises two parts, a primary part 110 and a secondary part 120, moveable relative to each other, in particular rotatable with respect to each other. By the configuration of the secondary part 120, when it rotates with respect to the primary part 110, which remains preferably static, the injection hole(s) and/or the dispensing outlet open and/or close, therefore allowing a control of the preparation and dispensing process.

Referring now to Figure 2, the fitment assembly comprises a stationary part, primary part 110, and a secondary part 120, rotatable with respect to the primary part 110. The secondary part 120 comprises two fluid inlets 12, 12' where the piercing and injecting means 30 connect for injecting fluid: preferably, a flexible sheet covers these fluid inlets 12, 12' and the means 30 first pierce this sheet in order to connect to the inlets. The piercing and injecting means 30 connect in these two inlets and allow easier rotation of the secondary part 120 with respect to the primary part 110. The rotatable part 120 further comprises the dispensing outlet 13 and two injection holes 14 and 14'. Preferably, in this first embodiment of the invention, the sheet of flexible material configuring the container 20 overwraps all the fitment assembly 10, not only frontally (and in the rear part) but also on the lower part of it, 130. Preferably, the shape of the fitment assembly 10 is such that, when overwrapped by this flexible sheet, it is tightly done and no wrinkles are formed.

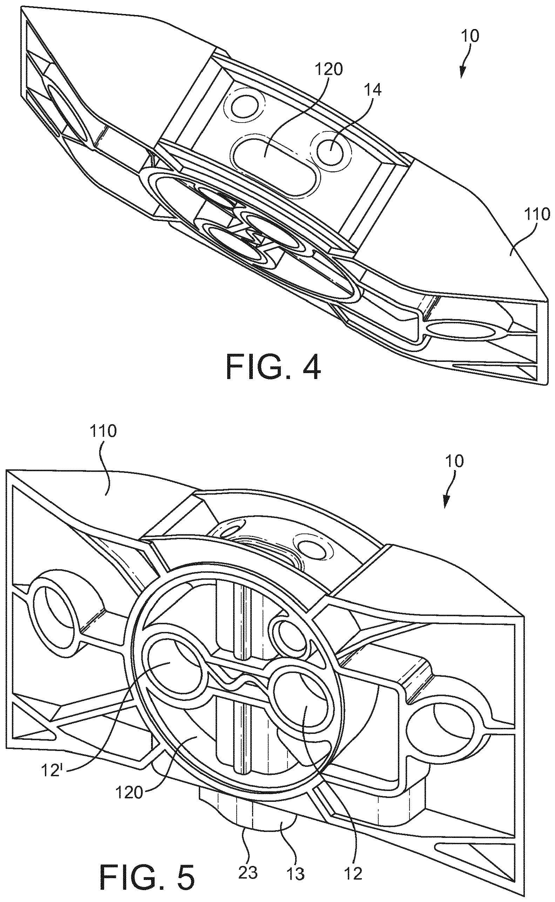

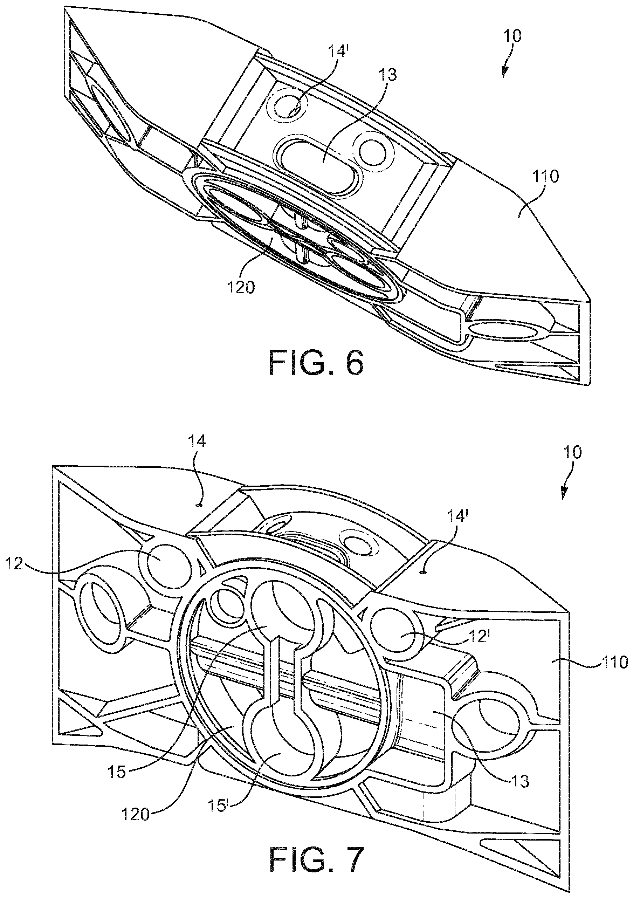

In the position shown in Figure 2, the injection holes are closed, and the dispensing outlet 13 is horizontally arranged, so it is also closed. When the means 30 pierce the external sheet and connect the fluid inlets 12 and 12', they start rotating the secondary part 120 with respect to the primary part 110, as represented in Figure 3. In this position, one of the injection holes 12' is open and can inject fluid inside the volume of the container 20 in order to start pre-wetting and first mixing the content ingredient inside, while the outlet 13 is closed: a further detail showing the injection hole 12' is represented in Figure 4. By the configuration of the parts 110 and 120, when the secondary part 120 rotates to a position such as shown in Figures 5 or 6, the dispensing outlet 13 is open, while the previous injection hole 14' is closed, but injection hole 14 is open. This allows the mixing and preparation of the dissolution inside the container 20 (through the fluid injected through injection hole 14) and also dispensing of it (through the dispensing outlet 13, as detailed in Figure 6). By a first opening of the injection hole 14', while the outlet 13 remains closed, a pre-wetting and first mixing is done before any dispensing occurs: this avoids that powder not dissolved or mixed is first delivered in cup.

As the lower part 130 of the fitment assembly 10 is overwrapped by a flexible sheet, the opening 23 of the dispensing outlet 13 is provided with a sharp edge 140 allowing that, when the outlet 13 moves to its vertical position for dispensing (Figures 5-6) the sheet in this lower part 130 has been torn and made accessible by this movement.

At the end of the process, the rotatable part 120 can rotate back to the position in Figure 2, so any dripping is avoided when the pack is removed from the preparation machine for its disposal.

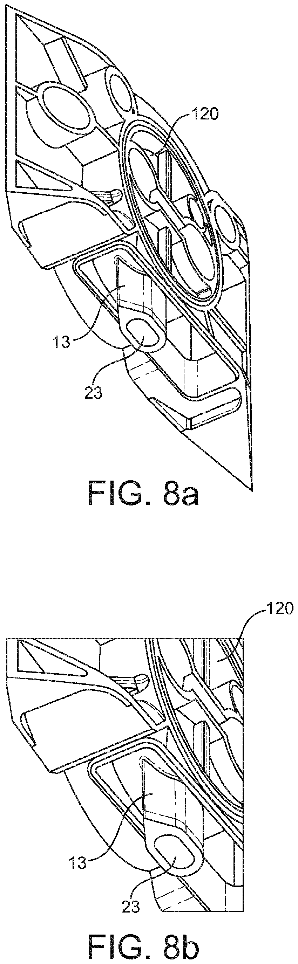

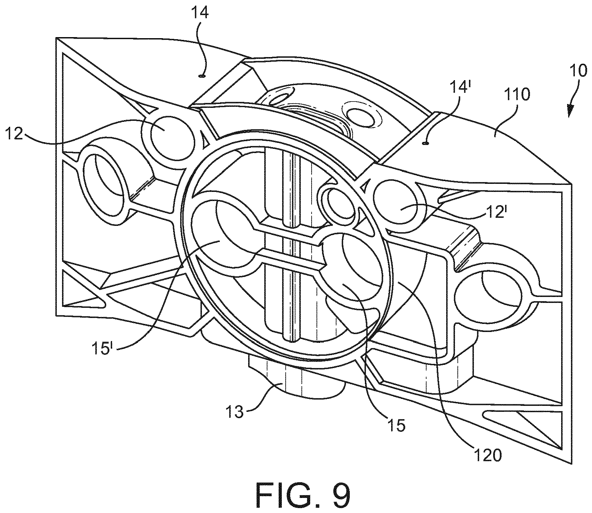

A *second embodiment of the fitment assembly 10 of the invention* is shown in Figures 7-9. This configuration is similar to that in the first embodiment, but the injection holes 14, 14' and the fluid inlets 12, 12' are not in the moveable part 120, but in the fixed primary part 110. The machine will therefore be provided with means to rotate the primary part 110, preferably piercing the flexible sheet in rotating points 15 an 15', to rotate and place vertically the outlet 13, and will further be provided with piercing and injecting means 30 which will pierce the sheet over the fluid inlets 12, 12' and will inject fluid through corresponding injection holes 14, 14'. In the position shown in Figure 7, the outlet 13 is horizontal, so it is closed. The means 30 pierce and inject fluid through one or two of the injection holes 14, 14' into the inner volume of the container 20, effect dissolution, and then the prepared content is delivered through the dispensing outlet 13, as shown in Figure 9. Similar to the first embodiment, when the outlet 13 moves to its vertical position for dispensing, its sharp edge 140 tears the flexible sheet over the lower part 130 of the fitment assembly 10, therefore opening the sheet and allowing dispensing. Injection of fluid can be done through one of the injection holes or through both of them at the same time.

At the end of the process, the rotatable part 120 can rotate back to the position in Figure 7, so any dripping is avoided when the pack is removed from the preparation machine for its disposal.

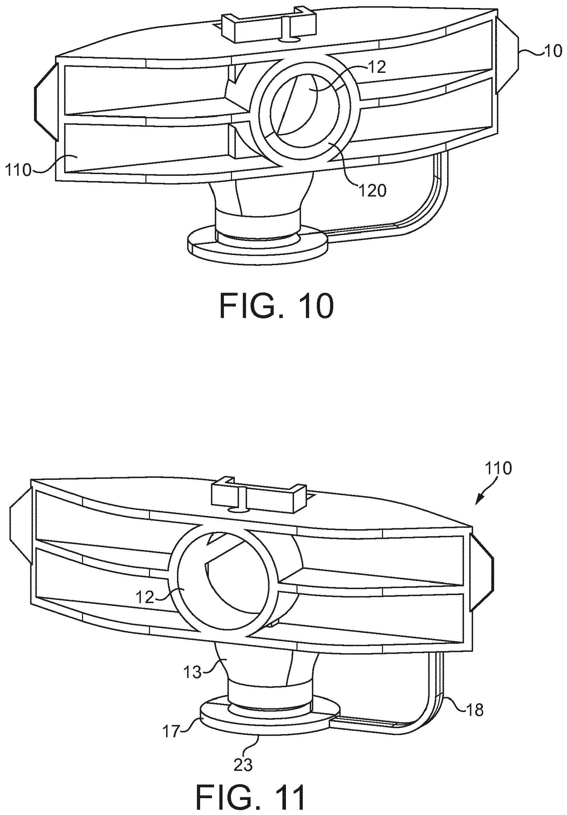

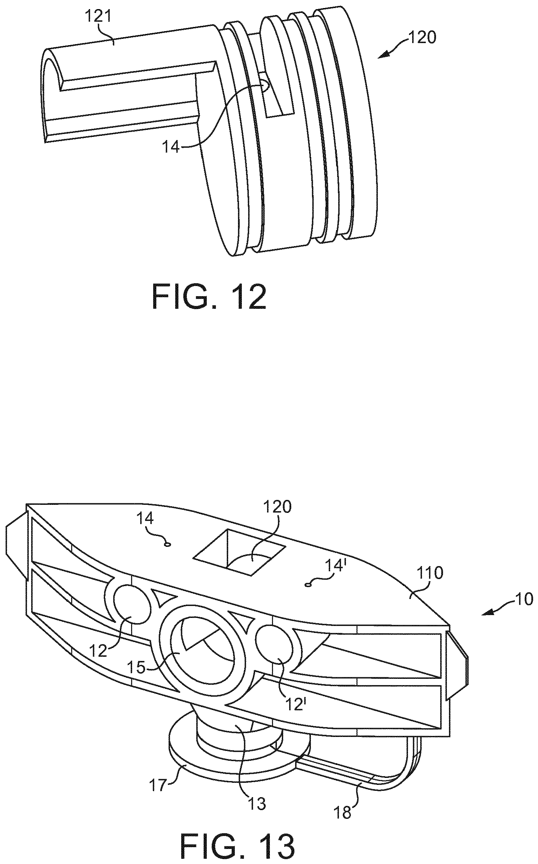

Figures 10-12 show *a third possible embodiment of the fitment assembly 10 of the present invention.* In this embodiment, the flexible sheet is not overwrapping the assembly 10, though it still covers the fluid inlet 12 (a second rear fluid inlet can also be provided so that the fitment is reversibly accessible). At least one injection hole 14 is provided in the rotatable part 120, while the dispensing outlet 13 is arranged in the stationary part 110. In a first positioning of the rotatable part 120 with respect to the stationary part 110, an elongated part 121 of the part 120 (see Figure 12) covers the upper part leading to the dispensing outlet 13, while one injection hole 14 is accessible and injects fluid into the inner volume of the container 20: therefore, in this configuration, the ingredient inside the volume is being mixed, without it being delivered, which avoids that any content not yet prepared (typically, any powder not yet diluted) leaves the pack and goes into the cup through the outlet 13. When the rotatable part 120 rotates over the stationary part 110, the elongated part 121 leaves free the access to the outlet 13, so the product can be delivered to the outside and typically into a cup. In this configuration, a second injection hole 14' can be accessible and can inject fluid into the inner volume of the container 20, or not. At the end of the process, the elongated part 121 rotates and closes again the exit to the outlet 13, so there is no final dripping when the pack is removed from the preparation machine.

In this third embodiment, and as shown in Figures 10-11, before the food or beverage preparation step, the dispensing outlet 13 is preferably closed at its end. Generally the dispensing outlet is closed by manufacturing and is configured for being opened at food or beverage production step. By "closed by manufacturing" it is meant that a complete pack, comprising the container and the fitment assembly 10, is manufactured with a closed dispensing outlet 13. This closure guarantees hygienic and shelf life protection. The dispensing outlet 13 can be opened by a machine or manually.

Preferably the dispensing outlet 13 is closed by a plug 17, as represented schematically in Figures 10 or 11, said plug 17 comprising means for maintaining it attached to the fitment assembly 10 after the opening of the dispensing outlet 13. Consequently the plug 17 does not fall in the beverage or food during its production. The means for maintaining the plug 17 attached to the fitment assembly 10 can be a plastic bond 18 attached to the fitment assembly 10, for example, or any other suitable means providing a similar effect. Moreover, the dispensing outlet 13 can also comprise a weakened area near the plug 17: this weakened area can be made for example as a narrowing of the dispensing outlet tube so that it is easier to cut or tear off the plug 17 by the machine.

Preferably the plug 17 is part of one single fitment assembly 10 comprising the dispensing outlet and the fluid inlet. In particular when the fitment assembly 10 is made by injection moulding, the design of the mould also comprises the plug 17. In the same manner the plastic bond 18 can also be part of the design of the fitment assembly 10 when it is made by injection moulding, which again provides advantages from a manufacturing point of view, as the same part comprises the fluid inlet, the plug 17 and the bond 18.

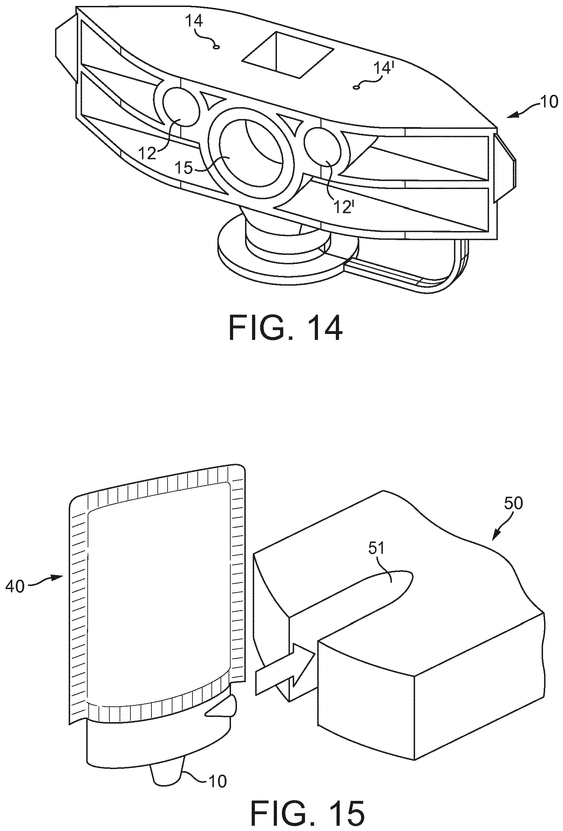

A *fourth possible embodiment of the fitment assembly 10 according to the present invention* is represented in Figures 13, 14. This configuration is similar to the one represented in Figures 10-12 (third embodiment), no complete overwrap being made on the fitment 10 but only on the frontal and rear sides of it. The outlet 13 is closed by a plug 17, joined by a bond 18 to the rest of the fitment assembly 10. The inlet of the fluid is done through fluid inlets 12, 12', respectively leading into injection holes 14, 14' to inject fluid at speed into the inner volume of the container 20. Rotation of the part 120 with respect to the stationary part 110 is done through a rotating point 15, where rotating means connect to effect such rotation. Figure 13 shows a positioning of the rotatable part 120 where an elongated part 121 covers the access to the dispensing outlet 13, so fluid is injected into the volume for mixing the ingredients in it, but no delivery is done. When the rotatable part 120 rotates, it is moved to a position as in Figure 14, in which the outlet 13 is open and mixture can be delivered into cup (when the plug 17 has been removed, even when not shown in Figure 14): the injection holes 14, 14' can continue to inject fluid into the volume or not.

At the end of the process, the rotatable part 120 moved back to a position as shown in Figure 13, so the access to the dispensing outlet 13 is closed and the pack can be removed without any risk of product dripping.

According to a second aspect, the invention also refers to *a pack 40* comprising a fitment assembly 10 as the one described previously, and at least one food or beverage container 20 to which the fitment assembly 10 is attached, as it is represented in Figure 1, for example. Different sizes of the pack 40, can be used in a same machine adapted to store different quantities of ingredients: typically, it is the configuration of the fitment assembly 10 as to external shape and piercing requirements of the fluid inlet what determines the machine to use; however, the size of the containers, when extending vertically, does not determine or limit the machine. As a consequence, it becomes possible to produce different products, such as for example a cup of espresso coffee or a bowl of soup. The external design and configuration of the fitment assembly 10 will remain unchanged independently on the product targeted; however, the internal design of the fitment assembly 10, in particular as to the diameter of the injection hole or holes will differ as a function of the ingredient to be processed and therefore as a function of the food or beverage product targeted. Also, other parameters such as the flow rate of fluid injected and/or the temperature of the fluid injected and/or the total volume of fluid injected, will be modified as a function of the ingredient to be processed and therefore as a function of the food or beverage product targeted.

The food or beverage container 20 configuring the pack 40 preferably comprises two flexible water impermeable sheets joined to one another to define an inner volume where at least one ingredient is stored. Preferably, the food or beverage container presents an essentially plane shape, wherein the fitment assembly 10 is arranged on one of the sides of the pack 40. Preferably the pack itself is substantially flexible and looks like a pouch or sachet. By flexible, it is meant that the sheets can be bent easily. The resulting pack 40 can be bent also, as being soft and can be deformed contrary to rigid containers. The flexible sheet material can be plastic laminates, metallised foil or alufoil or fibre base material. According to the invention the two flexible water impermeable sheets can be formed of one single flexible water impermeable sheet folded in half and joined at its free edges.

The pack 40 can also comprise an excrescence enabling the handling of the pack 40 by the user or consumer: this has not been shown in the Figures attached, though.

Typically, the two flexible water impermeable sheets joined to one another to define the inner volume of the container are formed of one single flexible water impermeable sheet folded in half and joined at its free edges. According to said mode the container is a plane pouch made of a flexible material sheet, said sheet being folded at the top of the container and bonded on its edges to define the inner volume, the bottom bonded edge typically including the fitment assembly 10. This embodiment constitutes a particularly easy way to manufacture the pack 40 comprising the container and the fitment assembly since it requires the cutting of only one piece of sheet - most preferably according to a rectangular shape - and its folding to create the inner volume for the food or beverage ingredient. Typically, also for manufacturing convenience, the fitment assembly 10 is introduced in the bottom edge of the container during the sealing of its edges.

According to the invention, either the fitment assembly 10 and/or the food or beverage container 20 preferably comprise identification means (not shown) which comprise the information for the processing of the ingredients inside the container 20 and provide this information to appropriate control means in the machine. As already mentioned, this information can comprise for example the parameters in the preparation process, such as: temperature of the fluid introduced, flow and total volume of the fluid, preparation time, sequences of relative movement of primary and secondary parts in the fitment assembly, etc.

These identification means can comprise any kind of recognition means such as, for example, mechanical codes, optical codes, RFID tags, bar codes, magnetic codes, or the like. These identification means can also be made as detection holes arranged for example on one lateral edge of the food or beverage container, configured by the two flexible sheets brought together to conform the pouch or container, preferably on the sealing area of the container, where there is no product or ingredient. When the two sheets are brought together and are welded on the edges to configure a container, on one of these lateral edges, additional welding with circumferential shape will be provided, thus configuring the holes as punching holes. A plurality of holes will typically be provided vertically on one of the edges of the container brought together: these holes will allow light to pass through and, depending on the configuration of the holes, the machine will be provided with the information for the processing of the container that has to be followed. Because the packs 40 according to the present invention are made reversible, in order to allow the machine read the identification means independently on the sense in which the pack 40 has been introduced, these identification means, typically these detection holes or punched holes, will be provided on two lateral edges of the container. The identification means can also provide the machine with the information regarding the sense of introduction of the pack.

Preferably, according to the invention, the pack 40 presents a plane shape oriented along a plane essentially vertically oriented during beverage production and the fluid inlet orientates the jet of fluid in a direction comprised in said plane. The fluid jet introduced from the bottom into the container is developing into circular and spiral movements creating turbulences, frictions and high contact surfaces between the fluid molecules (typically, water molecules) and the ingredient particles. In average the fluid molecules have several turns within the container until they leave it together with the beverage or food product once mixed. Best results (reconstitution) have been observed with a pack of rectangular shape. Packs with single fitment assembly placed in the corner of a rectangular pack have also been found to improve reconstitution.

According to the invention, the food or beverage container is arranged essentially vertically during the production and dispensing of the product or beverage, and the fitment assembly 10 is arranged in such a way that the fluid coming through the fluid inlet 12 is supplied into the container 20 in an upward direction.

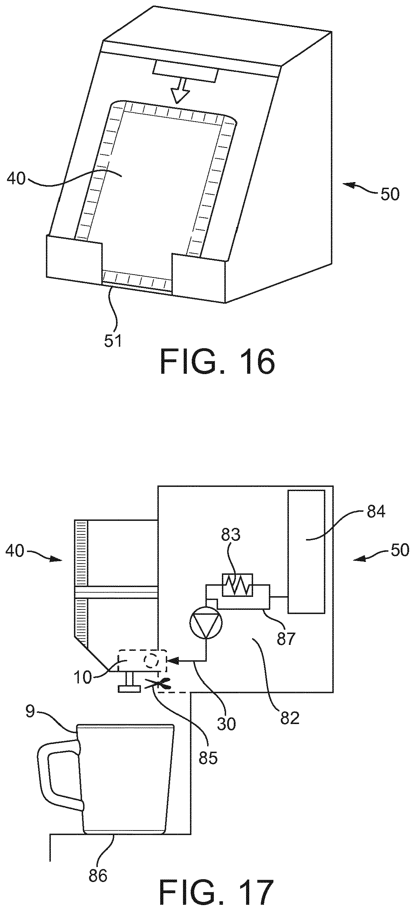

According to yet another aspect, the invention refers to *a machine 50* for preparing food or beverage products from a pack 40. The machine 50 comprises receiving means 51 adapted to accommodate the pack 40 preferably in such a way that the pack 40 is positioned vertically and the fitment assembly 10 is positioned at the bottom of the pack 40, and injecting means 30 (preferably also being piercing means) designed for engaging with the fitment assembly 10 and for injecting high pressure fluid inside the fluid inlet 12 of the fitment assembly 10. These injecting means 30 can also act as the rotating means for rotating the part 120 with respect to the stationary part 110 (first and third embodiments of the fitment assembly 10) or separate rotating means will be provided in the machine 50 to effect such rotation of the part 120 (second and fourth embodiments). Typically, as the pack 40 is processed to obtain the beverage or food product in an essentially vertical position in the machine 50, the pack 40 will be introduced either frontally in the machine 50 (as schematically represented in Figure 16) or laterally, so that the pack 40 is slidably inserted into a dedicated insert in the machine 50 (as schematically represented in Figure 15).

According to the present invention, the fluid can be supplied to the pack 40 at any temperature, cold, ambient or hot, depending on the type of food or beverage product targeted.

According to the invention and as schematically illustrated in Figure 17, a machine 50 for preparing food or beverage products from a pack 40 as described previously comprises at least:
- a fluid supply or tank 84 and a pump 82 for supplying pressurized fluid to the fluid inlet 12;
- a heater 83 for eventually heating the fluid;
- a bypass line 87 for delivering fluid at ambient temperature;
- a valve (not illustrated) for the selection of either hot or ambient fluid,
- optionally, a cooling unit (not shown) can also be provided in the machine 50 for delivering cold fluid;
- injecting means, preferably piercing and injecting means 30, more preferably a fluid needle, piercing the cover over the fluid inlet 12 and injecting the pressurized fluid coming from the fluid supply into the fluid inlet; these means can also act as rotating means for the part 120 or separate rotating means (not shown) will be provided in the machine;
- a device 85 for cutting or tearing the plug 17 from the dispensing outlet 13 (optional, for third and fourth embodiments of the fitment assembly 10);
- control means (not shown) to control the process parameters and/or the movement of the part 120 with respect to part 110.

The machine 50 can also comprise a data reader, preferably comprising an optical device, which reads and retrieves the information from the identification means regarding the process parameters to be used for preparing the food or beverage product from the pack 40 and sends it to the control means. Preferably, the data reader will retrieve the information from the identification means in the pack 40 by a light emitter device emitting light passing through punched holes configuring in a preferred embodiment the identification means.

Preferably the machine further comprises a positioning area 86 for allocating a drinking cup 9 under the dispensing outlet of the pack 40 when a food product or a beverage is prepared.

The present invention presents the advantage of proposing packs for the preparation of food or beverages wherein a broad range of different foods and beverages can be produced with the same machine. The foods and beverages can differ by their nature (coffee, tea, chocolate, soup, etc.), by their aspect (presence of foam for coffee, of foam for milk and chocolate, absence of bubbles for tea, etc.), by their volume (from espresso volume up to soup volume) and still be obtained by the same machine. The machine elements can remain very simple and limited to a simple fluid needle, typically a simple water needle.

The present invention presents the advantage of proposing a consumer friendly preparation of foods and beverages. The beverage of food delivered from the pack is ready to be served and does not require any additional process step, for example for foaming the beverage.

The present invention also presents the advantage of proposing packs wherein the ingredients are fully protected from atmosphere before use.

The present invention presents the advantage of proposing packs for preparing beverages or food products wherein the contact of ingredients and prepared beverage or food product with the machine is avoided and the risk of cross contamination is therefore limited. The prepared beverages or food products present optimal organoleptic properties.

The present invention further presents the advantage of proposing packs presenting a low environmental impact since they can be made of a laminated pouch with a small insert piece (fitment assembly) of plastic.

The present invention presents the advantage of proposing packs which can be very easily produced starting from flexible sheets and one single fitment assembly inserted. In particular the pack usually does not comprise an internal filter or membrane to be positioned in the inner volume during manufacturing.

The space needed for storing the packs according to the invention, is clearly much less than that for typical capsule containers, for example.

Also, as previously described, the configuration of the fitment assembly of the invention provides advantages, such as described below.
- Because the initial configuration of the fitment assembly is such that the dispensing outlet is closed, the risk that the ingredient arranged inside the inner volume of the container 20, which is typically configured as a powder, gets introduced inside the fitment assembly 10 and can either block an injection hole for example or can be introduced in the dispensing outlet so that when the product is delivered, the first thing dispensed is unprocessed (undissolved) powder is avoided.
- Because the dispensing outlet 13 is typically blocked while the food product or beverage is being prepared, the dissolution is improved inside the container. Moreover, the dissolution is enhanced and optimized also thanks to the control of one or more injection holes being opened or partially opened while the dissolution is made, so a control of this dissolution is possible as a function of the type of product prepared and/or of its viscosity.
- Dripping of remaining product from the pack when it is removed from the machine once the preparation of the food product or beverage has ended is also avoided, as the end position of the fitment assembly is such that both the dispensing outlet and the one or more injection holes are closed.
- Because the injection hole is closed while the product or beverage is prepared, any backflow of fluid towards the needle (piercing and injecting means) is also avoided.

Although the present invention has been described with reference to preferred embodiments thereof, many modifications and alternations may be made by a person having ordinary skill in the art without departing from the scope of this invention which is defined by the appended claims.

## Claims

1. A fitment assembly (10) for one or a plurality of food or beverage containers (20), each container comprising at least one ingredient for the preparation of a food or beverage product, the fitment assembly (10) comprising at least one fluid inlet (12) communicating with at least one injection hole (14) through which a fluid can be supplied into the food or beverage containers, and at least one dispensing outlet (13) through which the food or beverage product is dispensed;
**characterized in that** the fitment assembly (10) comprises two parts rotatable relative to each other such that this relative rotation opens or closes, totally or up to a certain degree, the at least one dispensing outlet (13).

2. Fitment assembly (10) according to claim 1, wherein the relative rotation of the two parts of the fitment assembly further opens or closes, totally or up to a certain degree, at least one injection hole (14).

3. Fitment assembly (10) according to any of the previous claims, wherein the fluid inlet (12) is arranged in a rotatable part (120) of the fitment assembly and communicates through an injection hole (14) with the inner volume of the container (20).

4. Fitment assembly (10) according to any of claims 1-2, wherein the fluid inlet (12) is arranged in a stationary part (110) of the fitment assembly and communicates through an injection hole (14) with the inner volume of the container (20).

5. Fitment assembly (10) according to any of the previous claims, the relative rotation of its two parts being configured in such a way as to be able to follow different defined sequences corresponding to different steps of usage of the fitment assembly (10) together with the one or plurality of containers (20), as a function of the type of ingredients and the type of food or beverage product.

6. Fitment assembly (10) according to any of the previous claims, comprising two fluid inlets reversibly positioned.

7. Fitment assembly (10) according to any of the previous claims, comprising a plurality of injection holes sequentially and/or simultaneously actuated as a function of the type of product prepared.

8. Fitment assembly (10) according to claim 7, connected to a plurality of containers (20), each communicating to at least one of the injection holes in the fitment assembly.

9. Fitment assembly (10) according to any of the previous claims configured for injecting a high velocity jet into the one or plurality of containers through the at least one injection hole.

10. Fitment assembly (10) according to any of the previous claims comprising a flexible cover over the at least one fluid inlet, this cover being piercable by appropriate means able to inject a fluid though the fluid inlet.

11. Fitment assembly (10) according to any of claims 1-9 comprising a flexible cover overwrapping the fitment assembly, the rotatable part of the fitment assembly comprising a sharpened area able to tear open when rotating the flexible cover in order to allow dispensing of the product through the dispensing outlet (13).

12. A pack (40) comprising a fitment assembly (10) according to any of claims 1-11 and at least one food or beverage container (20) to which the fitment assembly (10) is attached.

13. Pack (40) according to claim 12 wherein the containers (20) are configured by impermeable sheets joined to one another or by one impermeable sheet folded in half, defining an inner volume where a food or beverage ingredient is stored.

14. Pack (40) according to claim 13 wherein the impermeable sheets overwrap the fitment assembly (10).

15. Pack (40) according to any of claims 12-14 comprising identification means with the information for processing the ingredients inside the one or plurality of containers (20) such as temperature, flow and/or volume of the fluid introduced, preparation time, sequence of rotation of the parts in the fitment assembly (10).

16. Machine (50) for preparing a food or beverage product from a pack (40) according to any of claims 12-15, the machine comprising means (30) designed for engaging with the fitment assembly (10) and for injecting a fluid through the at least one fluid inlet (12), the means (30) being further configured to be able to rotate the two parts of the fitment assembly (10) relative to each other.

17. Machine (50) according to claim 16 wherein further means are provided configured to be able to rotate the two parts of the fitment assembly (10) relative to each other.

18. Machine (50) according to any of claims 16-17 configured to receive a pack (40) according to any of claims 12-15 in an essentially vertical position, injecting fluid into it in an upward direction.

19. Machine (50) according to any of claims 16-18 further comprising control means to control the processing of the ingredients inside the one or plurality of containers (20) such as temperature, flow and/or volume of the fluid introduced, preparation time, sequence of rotation of the parts in the fitment assembly (10).

## Patentansprüche

1. Einbauanordnung (10) für einen oder eine Vielzahl von Nahrungsmittel- oder Getränkebehältern (20), wobei jeder Behälter mindestens einen Inhaltsstoff zur Zubereitung eines Nahrungsmittel- oder Getränkeprodukts umfasst, wobei die Einbauanordnung (10) mindestens einen Fluideinlass (12) in Verbindung mit mindestens einem Einspritzloch (14) umfasst, durch das den Nahrungsmittel- oder Getränkebehältern ein Fluid zugeführt werden kann, und mindestens ein Abgabeauslass (13), durch die das Nahrungsmittel- oder Getränkeprodukt abgegeben wird;
**dadurch gekennzeichnet, dass** die Einbauanordnung (10) zwei relativ zueinander drehbare Teile aufweist, sodass diese relative Drehung den mindestens einen Abgabeauslass (13) vollständig oder bis zu einem gewissen Grad öffnet oder schließt.

2. Einbauanordnung (10) nach Anspruch 1, wobei die relative Drehung der beiden Teile der Einbauanordnung weiterhin zumindest ein Einspritzloch (14) vollständig oder bis zu einem gewissen Grad öffnet oder schließt.

3. Einbauanordnung (10) nach einem der vorstehenden Ansprüche, wobei der Fluideinlass (12) in einem drehbaren Teil (120) der Einbauanordnung angeordnet ist und durch ein Einspritzloch (14) mit dem Innenvolumen des Behälters (20) in Verbindung steht.

4. Einbauanordnung (10) nach einem der Ansprüche 1-2, wobei der Fluideinlass (12) in einem feststehenden Teil (110) der Einbauanordnung angeordnet ist und durch ein Einspritzloch (14) mit dem Innenvolumen des Behälters (20) in Verbindung steht.

5. Einbauanordnung (10) nach einem der vorstehenden Ansprüche, wobei die relative Drehung ihrer beiden Teile so eingerichtet ist, dass unterschiedliche definierte Sequenzen abgearbeitet werden können, die je nach der Art der Inhaltsstoffe und der Art des Nahrungsmittel- oder Getränkeprodukts unterschiedlichen Schritten der Verwendung der Einbauanordnung (10) zusammen mit dem einen oder der Vielzahl von Behältern (20) entsprechen.

6. Einbauanordnung (10) nach einem der vorstehenden Ansprüche, umfassend zwei reversibel positionierte Fluideinlässe.

7. Einbauanordnung (10) nach einem der vorstehenden Ansprüche, die eine Vielzahl von Einspritzlöchern umfasst, die je nach der Art des zubereiteten Produkts nacheinander und/oder gleichzeitig betätigt werden.

8. Einbauanordnung (10) nach Anspruch 7, die mit einer Vielzahl von Behältern (20) verbunden ist, die jeweils mit mindestens einem der Einspritzlöcher in der Einbauanordnung in Verbindung stehen.

9. Einbauanordnung (10) nach einem der vorstehenden Ansprüche, die zum Einspritzen eines Hochgeschwindigkeitsstrahls in den einen oder die Vielzahl von Behältern durch das mindestens eine Einspritzloch eingerichtet ist.

10. Einbauanordnung (10) nach einem der vorstehenden Ansprüche, umfassend eine flexible Abdeckung über dem mindestens einen Fluideinlass, wobei diese Abdeckung durch geeignete Mittel durchstochen werden kann, die in der Lage sind, ein Fluid durch den Fluideinlass einzuspritzen.

11. Einbauanordnung (10) nach einem der Ansprüche 1-9, umfassend eine flexible Abdeckung, die die Einbauanordnung umhüllt, wobei der drehbare Teil der Einbauanordnung einen geschärften Bereich umfasst, der beim Drehen der flexiblen Abdeckung aufreißen kann, um das Abgeben des Produkts durch den Abgabeauslass (13) zu ermöglichen.

12. Packung (40), umfassend eine Einbauanordnung (10) nach einem der Ansprüche 1-11 und mindestens einen Lebensmittel- oder Getränkebehälter (20), an dem die Einbauanordnung (10) befestigt ist.

13. Packung (40) nach Anspruch 12, wobei die Behälter (20) durch miteinander verbundene undurchlässige Folien oder durch eine undurchlässige, in der Hälfte gefaltete Folie aufgebaut sind, wodurch ein Innenvolumen definiert ist, in dem ein Nahrungsmittel- oder Getränkeinhaltsstoff aufbewahrt ist.

14. Packung (40) nach Anspruch 13, wobei die undurchlässigen Folien die Einbauanordnung (10) umhüllen.

15. Packung (40) nach einem der Ansprüche 12-14, umfassend Kennzeichnungsmittel mit den Informationen zum Verarbeiten der Inhaltsstoffe innerhalb des einen oder der Vielzahl von Behältern (20) wie zum Beispiel Temperatur, Durchflussmenge und/oder Volumen des eingeführten Fluids, Zubereitungszeit, Reihenfolge der Drehung der Teile in der Einbauanordnung (10).

16. Maschine (50) zum Zubereiten eines Lebensmittel- oder Getränkeprodukts aus einer Packung (40) nach einem der Ansprüche 12-15, wobei die Maschine Mittel (30) umfasst, die zum Eingreifen in die Einbauanordnung (10) und zum Einspritzen eines Fluids in den mindestens einen Fluideinlass (12) ausgelegt sind, wobei die Mittel (30) ferner so ausgelegt sind, dass sie in der Lage sind, die zwei Teile der Einbauanordnung (10) relativ zueinander zu drehen.

17. Maschine (50) nach Anspruch 16, wobei ferner Mittel bereitgestellt sind, die so eingerichtet sind, dass sie in der Lage sind, die beiden Teile der Einbauanordnung (10) relativ zueinander zu drehen.

18. Maschine (50) nach einem der Ansprüche 16-17 die so eingerichtet ist, dass eine Packung (40) nach einem der Ansprüche 12-15 in einer im Wesentlichen vertikalen Position aufgenommen wird, wobei Fluid in eine nach oben gerichtete Richtung eingespritzt wird.

19. Packung (50) nach einem der Ansprüche 16-18, ferner umfassend Steuerungsmittel zum Steuern des Verarbeitens der Inhaltsstoffe innerhalb des einen oder der Vielzahl von Behältern (20) wie zum Beispiel Temperatur, Durchflussmenge und/oder Volumen des eingeführten Fluids, Zubereitungszeit, Reihenfolge der Drehung der Teile in der Einbauanordnung (10).

## Revendications

1. Ensemble accessoire (10) pour un ou une pluralité de récipient(s) à aliment ou boisson (20), chaque récipient comprenant au moins un ingrédient pour la préparation d'un produit alimentaire ou de boisson, l'ensemble accessoire (10) comprenant au moins une entrée de fluide (12) communiquant avec au moins un trou d'injection (14) à travers lequel un fluide peut être alimenté dans les récipients à aliment ou boisson, et au moins une sortie de distribution (13) à travers laquelle le produit alimentaire ou de boisson est distribué ;
**caractérisé en ce que** l'ensemble accessoire (10) comprend deux parties pouvant tourner l'une par rapport à l'autre de telle sorte que cette rotation relative ouvre ou ferme, totalement ou jusqu'à un certain degré, l'au moins une sortie de distribution (13).

2. Ensemble accessoire (10) selon la revendication 1, dans lequel la rotation relative des deux parties de l'ensemble accessoire ouvre ou ferme en outre, totalement ou jusqu'à un certain degré, au moins un trou d'injection (14).

3. Ensemble accessoire (10) selon l'une quelconque des revendications précédentes, dans lequel l'entrée de fluide (12) est agencée dans une partie rotative (120) de l'ensemble accessoire et communique par l'intermédiaire d'un trou d'injection (14) avec le volume interne du récipient (20).

4. Ensemble accessoire (10) selon l'une quelconque des revendications 1 ou 2, dans lequel l'entrée de fluide (12) est agencée dans une partie fixe (110) de l'ensemble accessoire et communique par l'intermédiaire d'un trou d'injection (14) avec le volume interne du récipient (20).

5. Ensemble accessoire (10) selon l'une quelconque des revendications précédentes, la rotation relative de ses deux parties étant configurée d'une manière telle à être apte à suivre différentes séquences définies correspondant à des étapes différentes d'utilisation de l'ensemble accessoire (10) conjointement avec le ou la pluralité de récipient(s) (20), en fonction du type d'ingrédients et du type de produit alimentaire ou de boisson.

6. Ensemble accessoire (10) selon l'une quelconque des revendications précédentes, comprenant deux entrées de fluide positionnées de manière réversible.

7. Ensemble accessoire (10) selon l'une quelconque des revendications précédentes, comprenant une pluralité de trous d'injection actionnés séquentiellement et/ou simultanément en fonction du type de produit préparé.

8. Ensemble accessoire (10) selon la revendication 7, relié à une pluralité de récipients (20), communiquant chacun avec au moins un des trous d'injection dans l'ensemble accessoire.

9. Ensemble accessoire (10) selon l'une quelconque des revendications précédentes configuré pour injecter un jet à grande vitesse dans le ou la pluralité de récipient(s) par l'intermédiaire de l'au moins un trou d'injection.

10. Ensemble accessoire (10) selon l'une quelconque des revendications précédentes comprenant un couvercle flexible par-dessus l'au moins une entrée de fluide, ce couvercle pouvant être percé par un moyen approprié apte à injecter un fluide à travers l'entrée de fluide.

11. Ensemble accessoire (10) selon l'une quelconque des revendications 1 à 9 comprenant un couvercle flexible recouvrant l'ensemble accessoire, la partie rotative de l'ensemble accessoire comprenant une zone effilée apte à s'ouvrir par déchirement lorsqu'on fait tourner le couvercle flexible afin de permettre la distribution du produit à travers la sortie de distribution (13).

12. Emballage (40) comprenant un ensemble accessoire (10) selon l'une quelconque des revendications 1 à 11 et au moins un récipient à aliment ou boisson (20) auquel l'ensemble accessoire (10) est fixé.

13. Emballage (40) selon la revendication 12 dans lequel les récipients (20) sont configurés par des feuilles imperméables jointes les unes aux autres ou par une feuille imperméable pliée en deux, définissant un volume interne où un ingrédient d'aliment ou de boisson est stocké.

14. Emballage (40) selon la revendication 13 dans lequel les feuilles imperméables recouvrent l'ensemble accessoire (10).

15. Emballage (40) selon l'une quelconque des revendications 12 à 14 comprenant un moyen d'identification avec les informations pour le traitement des ingrédients à l'intérieur du ou de la pluralité de récipient(s) (20) telles que la température, le débit et/ou le volume du fluide introduit, le temps de préparation, la séquence de rotation des parties dans l'ensemble accessoire (10).

16. Machine (50) pour la préparation d'un produit alimentaire ou de boisson à partir d'un emballage (40) selon l'une quelconque des revendications 12 à 15, la machine comprenant un moyen (30) conçu pour venir en prise avec l'ensemble accessoire (10) et pour injecter un fluide à travers l'au moins une entrée de fluide (12), le moyen (30) étant configuré en outre pour être apte à faire tourner les deux parties de l'ensemble accessoire (10) l'une par rapport à l'autre.

17. Machine (50) selon la revendication 16 dans laquelle des moyens supplémentaires sont fournis configurés pour être aptes à faire tourner les deux parties de l'ensemble accessoire (10) l'une par rapport à l'autre.

18. Machine (50) selon l'une quelconque des revendications 16 ou 17 configurée pour recevoir un emballage (40) selon l'une quelconque des revendications 12 à 15 dans une position sensiblement verticale, injectant un fluide dans celui-ci dans une direction vers le haut.

19. Machine (50) selon l'une quelconque des revendications 16 à 18 comprenant en outre un moyen de commande pour commander le traitement des ingrédients à l'intérieur du ou de la pluralité de récipient(s) (20) telles que la température, le débit et/ou le volume du fluide introduit, le temps de préparation, la séquence de rotation des parties dans l'ensemble accessoire (10).
